# EUROPÄISCHE PATENTSCHRIFT

(11) **EP 2 798 312 B1**
(45) Veröffentlichungstag und Bekanntmachung des Hinweises auf die Patenterteilung: **27.03.2019**
(21) Anmeldenummer: 12829140.8
(22) Anmeldetag: 28.12.2012
(51) Int. Cl.: G01D 5/20, G01D 5/22

(54) **VORRICHTUNG UND VERFAHREN ZUR MESSUNG EINER RELATIVBEWEGUNG EINES TARGETS**
APPARATUS AND METHOD FOR MEASURING A RELATIVE MOVEMENT OF A TARGET
DISPOSITIF ET PROCÉDÉ DE MESURE D'UN MOUVEMENT RELATIF D'UNE CIBLE

(30) Priorität: 30.12.2011 AT 19082011
(43) Veröffentlichungstag der Anmeldung: 05.11.2014
(73) Patentinhaber: Linz Center of Mechatronics GmbH, 4040 Linz (AT)
(72) Erfinder: BULIC, Neven, 10000 Zagreb (HR); DIRNBERGER, Peter, 4490 St. Florian (AT); SILBER, Siegfried, 4202 Kirchschlag (AT)
(74) Vertreter: Jell, Friedrich
(86) Internationale Anmeldenummer: PCT/AT2012/050211
(87) Internationale Veröffentlichungsnummer: WO 2013/096987

(56) Entgegenhaltungen:
- DE-A1-102006 026 543
- US-A- 4 906 924

## Beschreibung

### Technisches Gebiet

Die Erfindung betrifft ein Verfahren und eine Vorrichtung zur Messung einer Relativbewegung eines Targets, insbesondere Rotors einer elektrischen Maschine, mit wenigstens zwei elektrischen Schwingkreisen, von denen wenigstens ein Schwingkreis mit seiner Spule mit dem Target induktiv zusammenwirkt, und mit einer mit den Schwingkreisen verbundenen Auswerteschaltung, die in Abhängigkeit der auf die Relativbewegung des Targets zurückgehenden Änderung der jeweiligen Schwingung der Schwingkreise Messdaten erzeugt, anhand zumindest dieser auf die Relativbewegung des Targets rückgeschlossen werden kann.

### Stand der Technik

Aus dem Stand der Technik ist bekannt (WO2010/124310A2), zur Messung einer Relativbewegung eines Targets, zwei elektrische Schwingkreise mit dem Target induktiv zu koppeln und bei einer Lageänderung des Targets die Frequenzänderungen der Schwingkreise zu nutzen, um auf die Relativbewegung des Targets rückzuschließen. Die Messdaten, die mit Hilfe einer Auswerteschaltung von den Schwingkreisen erfasst werden, werden auch einer Differenzbildung unterworfen, um Störeinflüsse zu kompensieren. Zwar kann mit solch einer Vorrichtung eine vergleichsweise robuste Messung durchgeführt werden, der Einfluss einer Relativbewegung des Targets auf die Frequenzänderung der jeweiligen Schwingkreise führt jedoch meist zu einem schmalen Messband. Eine hochauflösende Abstandsmessung bzw. Relativmessung fordert daher oftmals einen vergleichsweise hohen konstruktiven Aufwand.

Außerdem ist aus der DE2453898C2 ein mit einem Target induktiv zusammenwirkender elektrischer Schwingkreis bekannt, der mit einer Signalquelle verbunden ist. Die Signalquelle führt dem Messschwingkreis eine Bezugsschwingung zu. Durch Analyse einer Phasenverschiebung der Schwingung des Schwingkreises zur Bezugsschwingung kann auf eine Relativbewegung des Targets rückgeschlossen werden. Eine vergleichsweise hohe Auflösung kann mithilfe dieser Schaltung nicht erreicht werden, zudem ist eine derartige Schaltung anfällig gegenüber Störeinflüssen.

### Darstellung der Erfindung

Die Erfindung hat sich daher die Aufgabe gestellt, eine Vorrichtung zur Messung einer Relativbewegung eines Targets der eingangs geschilderten Art derart zu verbessern, dass trotz hoher Standfestigkeit gegenüber Störeinflüssen eine hochauflösende Abstandsmessung bzw. Relativmessung möglich wird.

Die Erfindung löst die gestellte Aufgabe hinsichtlich der Vorrichtung dadurch, dass die Schwingkreise galvanisch gekoppelt sind und dass die Auswerteschaltung in Abhängigkeit einer Phasenverschiebung wenigstens einer Schwingung der Schwingkreise Messdaten erzeugt.

Sind die Schwingkreise galvanisch gekoppelt, kann zwischen den Schwingkreisen vorteilhaft und konstruktiv einfach ein elektrischer Abgleich geschaffen werden, weil sich die Schwingkreise durch diese elektrische Verbindung ohnehin eine gemeinsame Frequenz aufzwingen. Hohe Robustheit gegenüber Störeinflüssen, beispielsweise einer Temperaturdrift der Bauteile der Schwingkreise und/oder Alterungserscheinungen dieser Bauteile, können so auf einfache Weise kompensiert werden. Zu diesem Zweck kann eine Spule eines Schwingkreises mit dem Target und die andere Spule des anderen Schwingkreises mit den Umgebungseinflüssen belastet werden. Dieser Vorteil kann insbesondere dadurch verstärkt werden, indem Messdaten einer Differenzbildung zwischen den jeweiligen Schwingungen der Schwingkreise berücksichtigt werden. Zu diesem Zweck kann die Auswerteschaltung in Abhängigkeit einer Phasenverschiebung wenigstens einer Schwingung der Schwingkreise Messdaten erzeugen. Solch eine Differenzbildung kann beispielsweise durch eine analoge und/oder digitale Verarbeitung der Schwingungen der Schwingkreise durchgeführt werden. Da sich nun aufgrund einer Fixierung der Schwingkreise auf eine gemeinsame Frequenz eine Relativbewegung des Targets in einer gegenseitigen Phasenverschiebung der Schwingungen der Schwingkreise äußern kann, was vergleichsweise empfindlich erfolgt, ist es auch möglich, dass die Auswerteschaltung in Abhängigkeit dieser Phasenverschiebung Messdaten erzeugt, die eine vergleichsweise hohe Auflösung der Messung der Relativbewegung des Targets zulassen kann. Hierfür kann es vorteilhaft sein, wenn die Schwingkreise schaltgleich aufgebaut sind, eine geringe Dämpfung und/oder eine annähernd gleiche Resonanzfrequenz aufweisen. Gegenüber dem Stand der Technik kann die erfindungsgemäße Vorrichtung daher nicht nur eine verbesserte Auflösung bei der Messung einer Relativbewegung, sondern auch eine hohe Robustheit gegenüber Störeinflüssen sicherstellen.

Im Allgemeinen wird erwähnt, dass unter galvanischer Kopplung eine elektrische Verbindung zwischen den beiden Schwingkreisen verstanden werden kann, die im Idealfall widerstandsfrei ist.

Die Genauigkeit in der Relativmessung kann verbessert werden, wenn wenigstens zwei elektrische Schwingkreise mit ihrer jeweiligen Spule mit dem Target induktiv zusammenwirken.

Umfasst die Vorrichtung einen mit den Schwingkreisen elektrisch verbundenen Referenzoszillator, der eine Referenzschwingung aufweist und diese den Schwingkreisen zuführt, kann die Störfestigkeit der Vorrichtung noch weiter verbessert werden. Die galvanisch gekoppelten Schwingkreise können nämlich so zu einer anderen erzwungenen Schwingung angeregt werden, als sich diese aus ihrer reinen galvanischen Kopplung einstellen würde. Es kann nämlich ein negativer Einfluss unerwünschter elektromagnetischer Einkopplungen auf die Schwingkreise verringert werden.

Die Empfindlichkeit der Vorrichtung kann weiter erhöht werden, wenn die Auswerteschaltung in Abhängigkeit der Phasendifferenzen, die sich aus der Referenzschwingung und den Schwingungen der Schwingkreise ergeben, Messdaten erzeugt.

Besonders hohe Kopplungseffekte für empfindlich auf Relativbewegungen eines Targets ansprechende Messdaten können ermöglicht werden, indem die Auswerteschaltung in Abhängigkeit der Differenz zwischen den Phasendifferenzen, die sich aus der Referenzschwingung und den Schwingungen der Schwingkreise ergeben, Messdaten erzeugt. Selbst gleiche Abstände zwischen den Spulen der Schwingkreise und dem Target bzw. in Folge dessen gleiche Schwingungen der Schwingkreise können so für eine Phasendifferenz zwischen den Schwingungen der Schwingkreise und der Referenzschwingung sorgen. Somit können selbst solche Lagen eines Targets robust erkannt werden, insbesondere wenn eine digitale Auswertung der Messdaten erfolgen soll.

Es ist aber auch vorstellbar, dass die Auswerteschaltung in Abhängigkeit einer Phasendifferenz zwischen den Schwingungen der beiden Schwingkreise Messdaten erzeugt. Diese erfindungsgemäße Lösung kann sich insbesondere durch ihre konstruktive Einfachheit gegenüber den vorstehend genannten alternativen Lösungen auszeichnen.

Besonders starke Kopplungseffekte zwischen den Schwingkreisen können erreicht werden, wenn die Resonanzfrequenzen der Schwingkreise im Wesentlichen gleich sind. Außerdem kann damit eine nahezu lineare Abhängigkeit in der Phasenverschiebung der Schwingungen in Folge einer Relativbewegung des Targets gegenüber den diesbezüglichen Spulen für eine Messdatenverarbeitung genutzt werden.

Besonders robust gegenüber elektromagnetischen Störungen kann die Vorrichtung werden, indem die Frequenz der Referenzschwingung im Wesentlichen gleich zur Resonanzfrequenz wenigstens einer der Schwingkreise ist. Bevorzugt ist die Frequenz der Referenzschwingung höher als die Resonanzfrequenz.

Für konstruktive Einfachheit kann gesorgt werden, wenn das Target zwischen den Spulen der Schwingkreise vorgesehen ist. Außerdem führt in diesem Fall eine Relativbewegung des Targets zu einer im Wesentlichen entgegengesetzten induktiven Änderung der Spulen, was die Auflösung in der Messdatenerfassung vergleichsweise deutlich erhöhen kann. Die erfindungsgemäße Abstandsmessung bzw. Relativmessung kann sich damit gegenüber dem Stand der Technik besonders deutlich abheben.

Weist die Auswerteschaltung ein Zeitmessglied auf, das in Abhängigkeit der Phasenverschiebung Messdaten mit Zeitwerten erzeugt, kann eine konstruktiv besonders einfache Vorrichtung ermöglicht werden. Insbesondere kann sich ein TDC-Glied als Zeitmessglied durch seine erhöhte Messgenauigkeit gegenüber anderen bekannten Zeitmessgliedern, z.B. digitalen Zählern, für diese Zwecke auszeichnen.

Es ist aber auch vorstellbar, dass die Auswerteschaltung Messdaten mit einer zur Phasenverschiebung proportionalen analogen Spannungshöhe erzeugt. Damit kann eine konstruktiv einfache Vorrichtung geschaffen werden.

Einfache Konstruktionsverhältnisse können sich ergeben, wenn die Schwingkreise galvanisch miteinander gekoppelt sind. Eine derartige galvanische Kopplung kann über eine direkte elektrische Verbindung (Kurzschlussleitung bzw. direkte galvanische Kopplung) oder auch über einen Koppelwiderstand erfolgen.

Eine weitere galvanische Kopplung der Schwingkreise ist vorstellbar, indem diese galvanisch mit demselben Referenzoszillator gekoppelt sind, um diese gekoppelten Schwingkreise für die Messung einer Relativbewegung eines Targets zu verwenden.

Diese Messung kann zur Erfassung vergleichsweise geringer Relativbewegungen am Target verbessert werden, wenn ein Schwingkreis der beiden Schwingkreise über ein Verzögerungsglied mit dem Referenzoszillator galvanisch angekoppelt ist. Zudem kann sich mit dieser Maßnahme ein zusätzlicher konstruktiver Aufwand zur Vorzeichenermittlung der Relativbewegung erübrigen, was die Standfestigkeit der Vorrichtung weiter erhöhen kann.

Die Erfindung hat sich außerdem die Aufgabe gestellt, ein Verfahren zur Messung einer Relativbewegung eines Targets äußerst robust gegenüber Störeinflüssen auszubilden. Außerdem soll das Verfahren eine vergleichsweise hohe Dynamik aufweisen.

Die Erfindung löst die gestellte Aufgabe hinsichtlich des Verfahrens dadurch, dass in Abhängigkeit einer Phasenverschiebung der Schwingungen der galvanisch gekoppelten Schwingkreise auf die Relativbewegung des Targets rückgeschlossen wird.

Wird in Abhängigkeit einer Phasenverschiebung der Schwingungen der galvanisch gekoppelten Schwingkreise auf die Relativbewegung des Targets rückgeschlossen, kann eine vergleichsweise hohe Robustheit gegenüber Störeinflüssen erreicht werden. Außerdem das Verfahren kann durch eine gegenseitige Phasenverschiebung der Schwingungen der Schwingkreise vergleichsweise empfindlich reagieren, sodass mit einer vergleichsweise hohen Messdynamik ein schnelles Verfahren geschaffen werden kann.

Um den Einfluss einer unerwünschten elektromagnetischen Einkopplung auf die Schwingkreise zu vermindern, kann vorgesehen werden, dass den Schwingkreisen eine gegenüber ihrer Resonanzfrequenz verschiedene Referenzschwingung aufgezwungen wird. Die Robustheit des erfindungsgemäßen Verfahrens kann dadurch noch weiter verbessert werden.

Wird in Abhängigkeit der Phasendifferenzen, die sich aus der Referenzschwingung und den Schwingungen der Schwingkreise ergeben, auf die Relativbewegung des Targets rückgeschlossen, kann die Empfindlichkeit des Verfahrens noch weiter erhöht werden.

Ein auf die zu messsenden Daten besonders empfindlich ansprechendes Verfahren kann geschaffen werden, wenn in Abhängigkeit der Differenz zwischen den Phasendifferenzen, die sich aus der Referenzschwingung und den Schwingungen der Schwingkreise ergeben, auf die Relativbewegung des Targets rückgeschlossen wird.

Ein vergleichsweise einfaches Verfahren kann sich ergeben, wenn in Abhängigkeit einer Phasendifferenz zwischen den Schwingungen der beiden Schwingkreise auf die Relativbewegung des Targets rückgeschlossen wird.

Ein einfacher Abgleich der Schwingkreise kann erfolgen, indem die Schwingkreise galvanisch miteinander gekoppelt werden. Das Verfahren kann dadurch besonders einfach handhabbar werden.

Alternativ können die Schwingkreise galvanisch mit demselben Referenzoszillator gekoppelt werden, um damit die Relativbewegung eines Targets zu messen.

Eine vergleichsweise hohe Auflösung in der Messdatenerfassung kann erreicht werden, wenn die Referenzschwingung einem Schwingkreis im Gegensatz zum anderen Schwingkreis mit einer zusätzlichen Zeitverzögerung aufgezwungen wird.

### Kurze Beschreibung der Zeichnung

In den Figuren ist beispielsweise der Erfindungsgegenstand anhand von Ausführungsbeispielen näher dargestellt. Es zeigen
- Fig. 1: eine Ansicht auf eine Vorrichtung zur Positionsmessung eines Targets,
- Fig. 2: eine Teilansicht auf die nach Fig. 1 dargestellte Vorrichtung,
- Fig. 3: eine Ansicht zu einem Schaltplan nach Fig. 2,
- Fig. 4: einen Signalablauf zu Knotenpunkten der nach Fig. 1 dargestellten Vorrichtung,
- Fig. 5: eine weitere Vorrichtung zur Positionsmessung eines Targets,
- Fig. 6: ein drittes Ausführungsbeispiel zu einer Vorrichtung zur Positionsmessung eines Targets,
- Fig. 7: ein viertes Ausführungsbeispiel zu einer Vorrichtung zur Positionsmessung eines Targets und
- Fig. 8: einen Signalablauf zu Knotenpunkten der nach Fig. 7 dargestellten Vorrichtung.

### Weg zur Ausführung der Erfindung

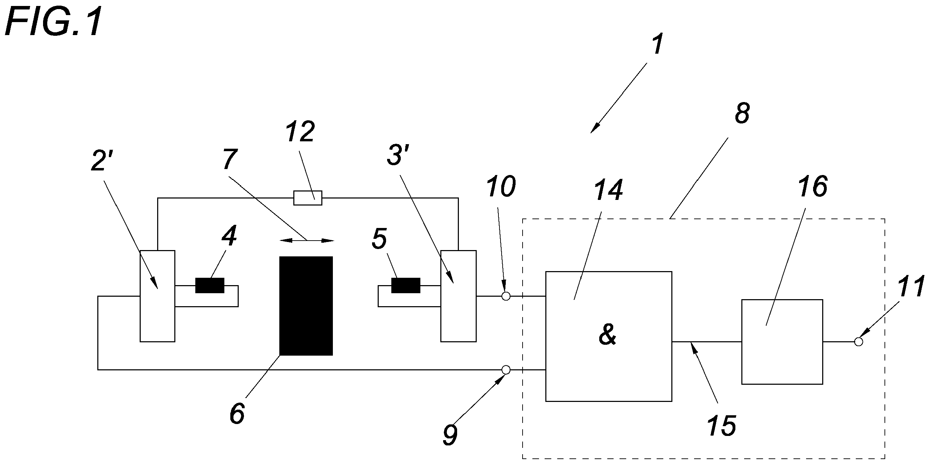

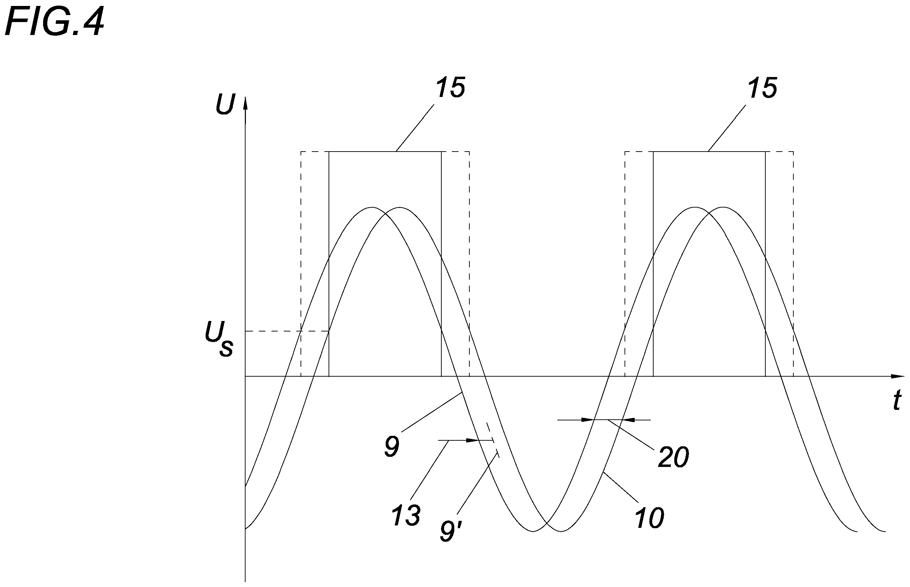

Die nach Fig. 1 in einem ersten Ausführungsbeispiel dargestellte Vorrichtung 1 weist zwei elektrische Schwingkreise 2, 3 auf, die über ihre Spulen 4, 5 mit einem Target 6 induktiv zusammenwirken. Die Schwingkreise 2, 3 sind Teil eines nicht näher dargestellten Oszillators 2', 3'. Lediglich dessen Spulen 4, 5 sind dargestellt. Eine Relativbewegung 7 führt zu einer - je nach Wirkprinzip unterschiedlichen - Änderung der Induktivität der Spulen 4, 5, die die elektrischen Parameter der Schwingkreise 2 und 3 ändert, was wiederum detektiert wird. Zu diesem Zweck ist eine Auswerteschaltung 8 mit den Schwingkreisen 2 und 3 verbunden, die in Abhängigkeit der auf die Relativbewegung 7 des Targets 6 zurückgehenden Änderungen der jeweiligen elektrischen Schwingungen 9, 10 der Schwingkreise 2, 3 Messdaten 11 erzeugt. Beispielsweise sind derartige Schwingungen 9, 10 der Fig. 4 zu entnehmen. Anhand dieser Messdaten 11 kann nun über bekannte Verfahren auf die Relativbewegung 7 des Targets 6 rückgeschlossen werden. Um erhöhte Empfindlichkeit und Störsicherheit zu erreichen, sind die Schwingkreise 2, 3 galvanisch über einen Koppelwiderstand 12 gekoppelt, wie dies beispielsweise der Fig. 1 entnommen werden kann. Dadurch sind die Schwingungen 9, 10 in ihrer Frequenz gleich und fixiert. Eine Änderung der Schwingungen 9, 10 aufgrund einer Relativbewegung 7 des Targets 6 kann sich daher in Phasenverschiebungen 13 der Schwingungen 9, 10 äußern. So ist aus der Fig. 4 zu erkennen, dass die durch eine Positionsänderung 7 des Targets 6 veränderte Schwingung 9 gegenüber seiner ursprünglichen Schwingung 9' in der Phase voraneilt. Die Auswerteschaltung 8 erzeugt nun in Abhängigkeit dieser Phasenverschiebung 13 Messdaten 11 - und zwar in Abhängigkeit der Phasendifferenz 20 zwischen den Schwingungen 9, 10 der beiden Schwingkreise 2, 3. Die elektrischen Schwingungen 9, 10 werden zu diesem Zweck einer digitalen Verarbeitung mit Hilfe eines UND-Gatters 14 unterworfen, der ein Rechtecksignal 15 bei Überschreiten einer Schwellspannung Uₛ erzeugt. Dieses Rechtecksignal 15 wird beispielsweise für eine Zeitmessung durch ein nachgeschaltetes TDC-Glied (Time to Digital Converter) als Zeitmessglied 16 zugeführt. Über diese Zeitmessdaten 11 kann nun auf den Wert der Phasenverschiebung 13 geschlossen und damit die Position des Targets 6 berechnet werden.

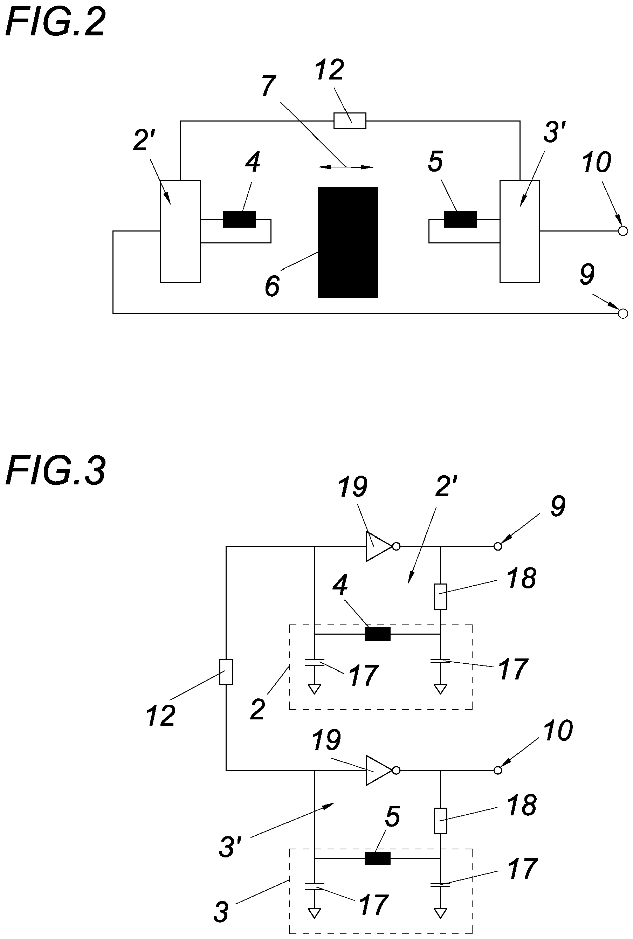

Nach Fig. 2 ist der mit dem Target analog zusammenwirkende Teil der Vorrichtung in vergrößerter Ansicht dargestellt. Fig. 3 zeigt ergänzend zur Fig. 2 einen Schaltplan, demgemäß beispielsweise auch die Schaltung zu den Oszillatoren 2', 3' zu entnehmen ist. Wie zu erkennen, sind die Oszillatoren 2', 3' aufweisend Kapazitäten 17, Widerstand 18, Inverter 19 und Spule 4 bzw. 5 ausgeführt. Verschiedenste Oszillatoren sind hierfür vorstellbar, beispielsweise Colpitts-Oszillatoren, Clapp-Oszillator, Hartley-Oszillator oder dergleichen.

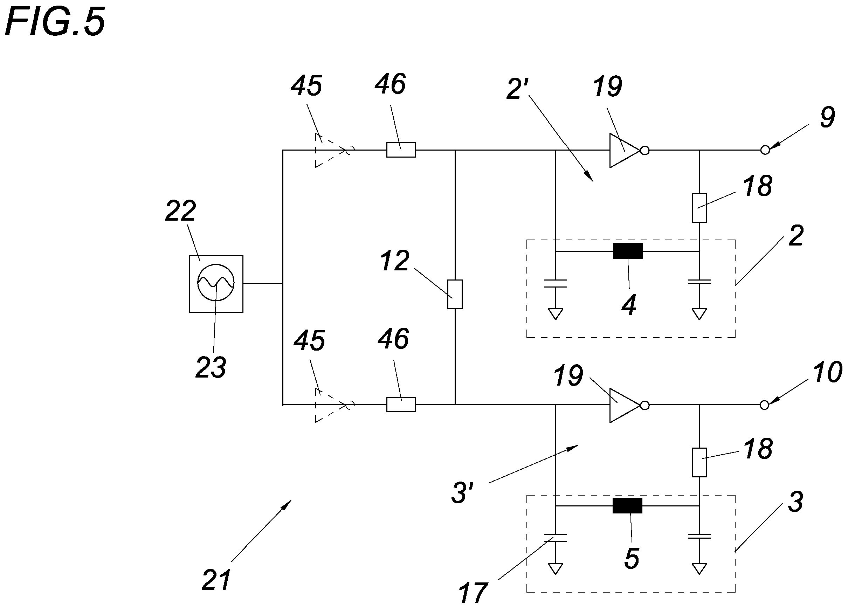

Die nach Fig. 5 dargestellte Vorrichtung 21 zeigt als zweites Ausführungsbeispiel zum Unterschied zu der nach den Figuren 1 bis 3 dargestellten Vorrichtung 1 zusätzlichen einen Referenzoszillator 22, der mit den Schwingkreisen 2, 3 bzw. den Oszillatoren 2', 3' elektrisch verbunden ist. Der Referenzoszillator 22 führt diesen eine Referenzschwingung 23 zu und zwingt damit die Schwingkreise 2, 3 zu Schwingungen 9, 10 mit einer Frequenz gleich der Frequenz der Referenzschwingung 23. Damit ist für jede Position des Targets 6 gegenüber den Spulen 4, 5 - was selbst eine Mittellage zwischen den Spulen 4, 5 einschließt - eine Phasendifferenz gegenüber der Referenzschwingung feststellbar.

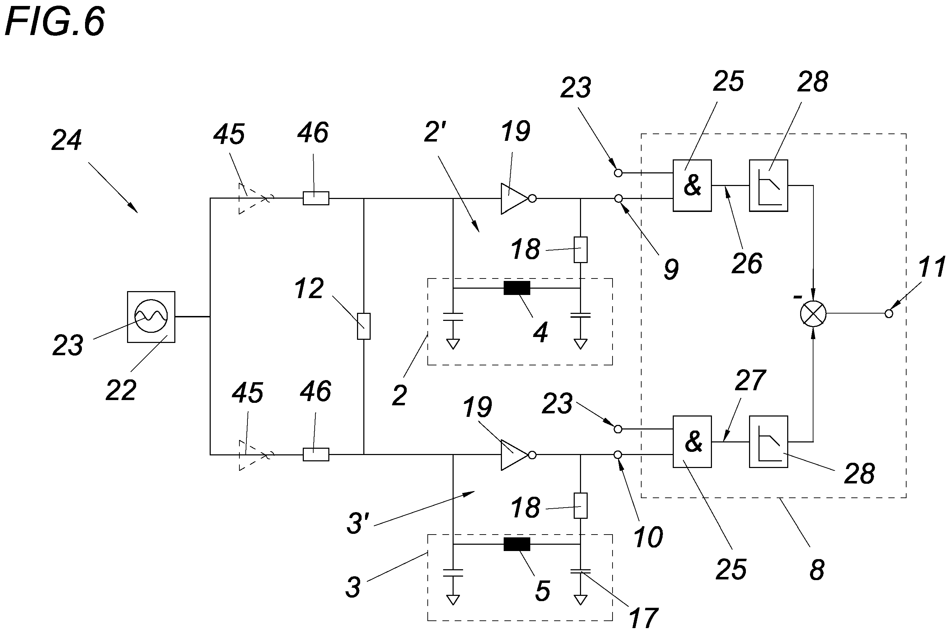

Im nach Fig. 6 dargestellten dritten Ausführungsbeispiel wird eine Vorrichtung 24 zur Positionsmessung eines Targets 6 gezeigt, bei dem die Auswerteschaltung 8 über je ein UND-Gatter 25 aus den Phasendifferenzen, die sich aus der Referenzschwingung 23 und den Schwingungen 9, 10 der Schwingkreise 2, 3 ergeben, Signale 26, 27, insbesondere in Rechteckform, erzeugt. Diese Signale 26, 27 werden auf je ein Filter 28 aufgeschaltet, deren Ausgänge über eine Subtraktion zu Messdaten 11 führen. In diesem Fall erzeugt die Auswerteschaltung Messdaten 11 mit einer zur Phasenverschiebung proportionalen analogen Spannungshöhe. Durch die Verwendung der Phasendifferenzen der Referenzschwingung 23 und den Schwingungen 9, 10 sowie der Subtraktion der gefilterten Signale 26 und 27 kann eine besonders robuste Vorrichtung mit vergleichsweise hoher Auflösung geschaffen werden.

Im Allgemeinen kann es vorteilhaft sein, wenn die Resonanzfrequenzen der Schwingkreise 2, 3 im Wesentlichen gleich sind und die Frequenz der Referenzschwingung 23 im Wesentlichen gleich zur Resonanzfrequenz der Schwingkreise 2, 3 ist. Für eine hohe Auflösung ist, wie in den Figuren 1 und 2 dargestellt, das Target 6 zwischen den Spulen 4, 5 der Schwingkreise 2, 3 vorgesehen.

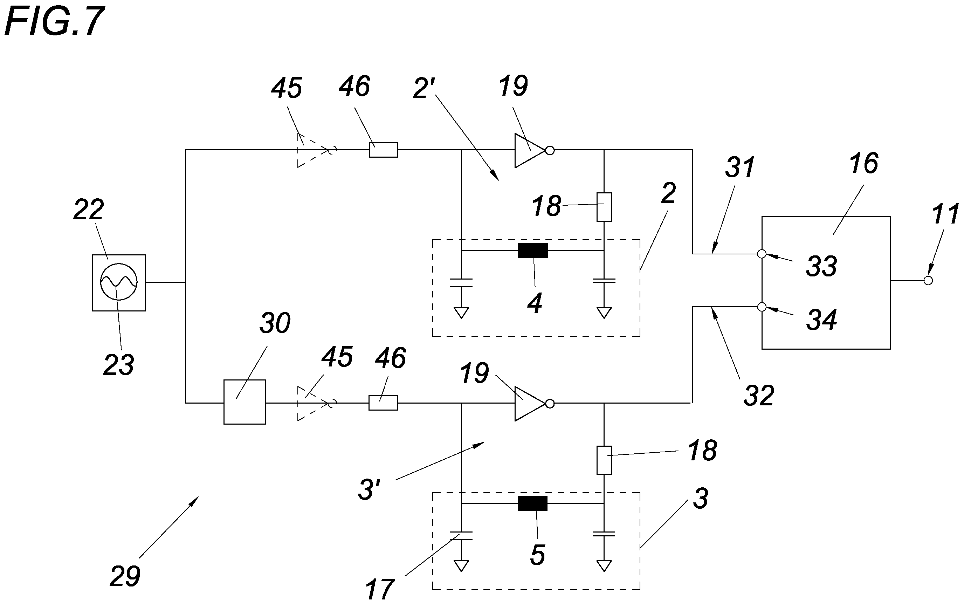

Im nach Fig. 7 dargestellten vierten Ausführungsbeispiel wird eine Vorrichtung 29 zur Positionsmessung eines Targets 6 gezeigt. Diese Vorrichtung 29 verzichtet zum Unterschied zur nach Fig. 5 dargestellten Vorrichtung 21 darauf, dass die Schwingkreise 2, 3 miteinander galvanisch gekoppelt sind und nützt einzig die galvanische Kopplung der Schwingkreise 2, 3 mit demselben Referenzoszillator 22. Der Vollständigkeit halber wird erwähnt, dass solch eine galvanische Kopplung mit dem Referenzoszillator 22 den anderen Ausführungsbeispielen nach Fig. 5 und 6 auch gemeinsam ist. Der Referenzoszillator 22 zwingt auch hier den Schwingkreisen 2 und 3 die Frequenz seiner Referenzschwingung auf.

Bei der Messung der Zeitdifferenz zwischen gekoppelten Schwingkreisen 2, 3 kann sich ein Problem der Ermittlung des Vorzeichens (entspricht der Richtung der Relativbewegung des Targets) ergeben - insbesondere bei sehr kleinen Relativbewegungen bzw. Auslenkungen ist die Zeitdifferenz klein und die Ermittlung des Vorzeichens kritisch.

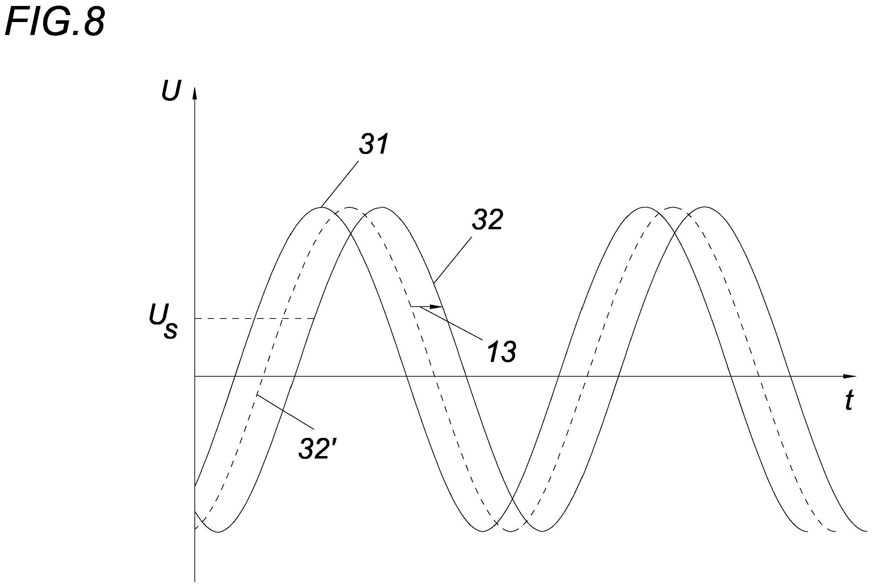

Um dies zu lösen, wird einem Schwingkreis 3 der beiden Schwingkreise 2, 3 die Referenzschwingung 22 zeitverzögert zugeführt wird. Zu diesem Zweck ist ein Verzögerungsglied 30 in der elektrischen Strecke zwischen Referenzoszillator 22 und Schwingkreis 3 vorgesehen. Dadurch ergibt sich eine gewollte Phasenverschiebung zwischen den Schwingungen 31 und 32', die sich durch eine Positionsänderung bzw. Relativbewegung 7 des Targets 6 verändert, wie an der Schwingung 32 nach Fig. 8 erkannt werden kann.

Die Auswertung dieser Phasenverschiebung 13 wird durch eine Zeitmessung eines nachgeschalteten TDC-Glieds (Time to Digital Converter) als Zeitmessglied 16 vorgenommen.

Hierzu startet die Schwingung 31 des direkt gespeisten Schwingkreises 2 die Zeitmessung des TDC-Glieds, indem dieses Signal mit einem Pegel über der Schaltschwelle Uₛ am Start-Eingang 33 des TDC-Glieds anliegt. Die Schwingung 32 des verzögert gespeisten Schwingkreises 3 stoppt die Zeitmessung, in dem dieses Signal mit einem Pegel über der Schaltschwelle Uₛ am Stopp-Eingang 34 des TDC-Glieds anliegt. Wird die Zeitverzögerung vom Signalwert des TDC-Glieds abgezogen, erhält man Zeitmessdaten 11, die proportional zur Verschiebung des Targets sind, ohne den Zusatzaufwand der Vorzeichenermittlung betrachten zu müssen. Die Verzögerungszeit sollte dabei so eingestellt sein, dass die Startflanke der Schwingung 31 zeitlich vor der Stoppflanke der Schwingung 32 am TDC-Glied eintrifft.

Zudem sind in den Figuren 5, 6 und 7 vor den Widerständen 46 strichliert Inverter 45 eingezeichnet, um zu veranschaulichen, dass nicht nur eine harmonische Referenzschwingung 22 sondern auch andere periodische Signale, beispielsweise eine Rechteckschwingung, die Schwingkreise 2, 3 zu erzwungenen Schwingungen 9, 10, 31, 32 anregen können.

## Patentansprüche

1. Vorrichtung zur Messung einer Relativbewegung (7) eines Targets (6), insbesondere Rotors einer elektrischen Maschine, mit wenigstens zwei galvanisch gekoppelten elektrischen Schwingkreisen (2, 3), von denen wenigstens ein Schwingkreis (2, 3) mit seiner Spule (4 bzw. 5) mit dem Target (6) induktiv zusammenwirkt, und mit einer mit den Schwingkreisen (2, 3) verbundenen Auswerteschaltung (8), die in Abhängigkeit der auf die Relativbewegung (7) des Targets (6) zurückgehenden Änderung der jeweiligen Schwingung (9 bzw. 10) der Schwingkreise (2, 3) Messdaten (11) erzeugt, anhand zumindest dieser auf die Relativbewegung (7) des Targets (6) rückgeschlossen wird, **dadurch gekennzeichnet, dass** die galvanisch gekoppelten Schwingkreise (2, 3) je Teil eines anderen Oszillators (2', 3') von zwei Oszillatoren (2', 3') sind, wobei die Auswerteschaltung (8) in Abhängigkeit einer Phasenverschiebung (13) wenigstens einer Schwingung (9, 10) der Schwingkreise (2, 3) der Oszillatoren (2', 3') Messdaten (11) erzeugt.

2. Vorrichtung nach Anspruch 1, **dadurch gekennzeichnet, dass** wenigstens zwei elektrische Schwingkreise (2, 3) mit ihrer jeweiligen Spule (4, 5) mit dem Target (6) induktiv zusammenwirken.

3. Vorrichtung nach Anspruch 1 oder 2, **dadurch gekennzeichnet, dass** die Vorrichtung (21, 24, 29) einen mit den Schwingkreisen (2, 3) elektrisch verbundenen Referenzoszillator (22) umfasst, der eine Referenzschwingung (23) aufweist und diese den Schwingkreisen (2, 3) zuführt, wobei
die Auswerteschaltung (8) in Abhängigkeit der Phasendifferenzen, die sich aus
der Referenzschwingung (23) und den Schwingungen (9, 10) der Schwingkreise (2, 3) ergeben, Messdaten (11) erzeugt, oder
die Auswerteschaltung (8) in Abhängigkeit der Differenz der Phasendifferenzen, die sich aus der Referenzschwingung (23) und den Schwingungen (9, 10) der Schwingkreise (2, 3) ergeben, Messdaten (11) erzeugt.

4. Vorrichtung nach einem der Ansprüche 1 bis 3, **dadurch gekennzeichnet, dass** die Resonanzfrequenzen der Schwingkreise (2, 3) im Wesentlichen gleich sind.

5. Vorrichtung nach einem der Ansprüche 3 bis 4, **dadurch gekennzeichnet, dass** die Frequenz der Referenzschwingung (23) im Wesentlichen gleich zur Resonanzfrequenz wenigstens einer der Schwingkreise (2, 3) ist.

6. Vorrichtung nach einem der Ansprüche 1 bis 5, **dadurch gekennzeichnet, dass** die Auswerteschaltung (8) ein Zeitmessglied (16), insbesondere ein TDC-Glied, aufweist, das in Abhängigkeit der Phasenverschiebung Messdaten (11) mit Zeitwerten erzeugt.

7. Vorrichtung nach einem der Ansprüche 1 bis 6, **dadurch gekennzeichnet, dass** die Auswerteschaltung (8) Messdaten (11) mit einer zur Phasenverschiebung proportionalen analogen Spannungshöhe erzeugt.

8. Vorrichtung nach einem der Ansprüche 1 bis 7, **dadurch gekennzeichnet, dass** die Schwingkreise (2, 3) galvanisch mit demselben Referenzoszillator (22) gekoppelt sind.

9. Vorrichtung nach Anspruch 8, **dadurch gekennzeichnet, dass** ein Schwingkreis (3) der beiden Schwingkreise (2, 3) über ein Verzögerungsglied (30) mit dem Referenzoszillator (22) galvanisch angekoppelt ist.

10. Verfahren zur Messung einer Relativbewegung (7) eines Targets (6), insbesondere Rotors einer elektrischen Maschine, bei dem zwei galvanisch gekoppelte, elektrische Schwingkreise (2, 3) zu einer elektrischen Schwingung (9, 10) angeregt werden, wenigstens eine Spule (4 bzw. 5) der Schwingkreise (2, 3) mit dem Target (6) induktiv zusammenwirkt und in Abhängigkeit einer auf die Relativbewegung (7) des Targets (6) zurückgehenden Änderung und insbesondere unter Berücksichtigung einer Differenzbildung der jeweiligen Schwingung (9 bzw. 10) der Schwingkreise (2, 3) auf die Relativbewegung des Targets (6) rückgeschlossen wird, **dadurch gekennzeichnet, dass** in Abhängigkeit einer Phasenverschiebung (13) der Schwingungen (9, 10) der galvanisch gekoppelten Schwingkreise (2, 3), die je Teil eines anderen Oszillators (2', 3') von zwei Oszillatoren (2', 3') sind, auf die Relativbewegung des Targets (6) rückgeschlossen wird.

11. Verfahren nach Anspruch 10, **dadurch gekennzeichnet, dass** den Schwingkreisen (2, 3) eine gegenüber ihrer Resonanzfrequenz verschiedene Referenzschwingung aufgezwungen wird.

12. Verfahren nach Anspruch 11, **dadurch gekennzeichnet, dass** in Abhängigkeit der Phasendifferenzen, die sich aus der Referenzschwingung (23) und den Schwingungen (9, 10) der Schwingkreise (2, 3) ergeben, auf die Relativbewegung des Targets (6) rückgeschlossen wird.

13. Verfahren nach Anspruch 11, **dadurch gekennzeichnet, dass** in Abhängigkeit der Differenz der Phasendifferenzen, die sich aus der Referenzschwingung (23) und den Schwingungen (9, 10) der Schwingkreise (2, 3) ergeben, auf die Relativbewegung des Targets (6) rückgeschlossen wird.

14. Verfahren nach einem der Ansprüche 10 bis 13, **dadurch gekennzeichnet, dass** die Schwingkreise (2, 3) galvanisch mit demselben Referenzoszillator (22) gekoppelt werden.

15. Verfahren nach Anspruch 14, **dadurch gekennzeichnet, dass** die Referenzschwingung (23) einem Schwingkreis (3) im Gegensatz zum anderen Schwingkreis (2) mit einer zusätzlichen Zeitverzögerung aufgezwungen wird.

## Claims

1. Apparatus for measuring a relative movement (7) of a target (6), more particularly a rotor of an electric machine, comprising at least two galvanically coupled electrical resonant circuits (2, 3), of which at least one resonant circuit (2, 3), with its coil (4 or 5), interacts inductively with the target (6), and comprising an evaluation circuit (8) which is connected to the resonant circuits (2, 3) and which generates measurement data (11) as a function of the change, attributed to the relative movement (7) of the target (6), in the respective oscillation (9 or 10) of the resonant circuits (2, 3), the relative movement (7) of the target (6) being deduced on the basis of at least said measurement data, **characterized in that** the galvanically coupled resonant circuits (2, 3) are each part of a different oscillator (2', 3') among two oscillators (2', 3'), wherein the evaluation circuit (8) generates measurement data (11) as a function of a phase shift (13) of at least one oscillation (9, 10) of the resonant circuits (2, 3) of the oscillators (2', 3').

2. Apparatus according to claim 1, **characterized in that** at least two electrical resonant circuits (2, 3), with their respective coil (4, 5), interact inductively with the target (6).

3. Apparatus according to claim 1 or 2, **characterized in that** the apparatus (21, 24, 29) comprises a reference oscillator (22) which is electrically connected to the resonant circuits (2, 3), which reference oscillator has a reference oscillation (23) and feeds the latter to the resonant circuits (2, 3), wherein
the evaluation circuit (8) generates measurement data (11) as a function of the phase differences resulting from the reference oscillation (23) and the oscillations (9, 10) of the resonant circuits (2, 3), or
the evaluation circuit (8) generates measurement data (11) as a function of the difference between the phase differences resulting from the reference oscillation (23) and the oscillations (9, 10) of the resonant circuits (2, 3).

4. Apparatus according to one of claims 1 to 3, **characterized in that** the resonant frequencies of the resonant circuits (2, 3) are substantially identical.

5. Apparatus according to one of claims 3 to 4, **characterized in that** the frequency of the reference oscillation (23) is substantially identical to the resonant frequency of at least one of the resonant circuits (2, 3).

6. Apparatus according to one of claims 1 to 5, **characterized in that** the evaluation circuit (8) has a timing element (16), in particular a TDC element, which generates measurement data (11) with time values as a function of the phase shift.

7. Apparatus according to one of claims 1 to 6, **characterized in that** the evaluation circuit (8) generates measurement data (11) with an analogue voltage level that is proportional to the phase shift.

8. Apparatus according to one of claims 1 to 7, **characterized in that** the resonant circuits (2, 3) are galvanically coupled to the same reference oscillator (22).

9. Apparatus according to claim 8, **characterized in that** one resonant circuit (3) of the two resonant circuits (2, 3) is galvanically coupled to the reference oscillator (22) via a delay element (30).

10. Method for measuring a relative movement (7) of a target (6), in particular a rotor of an electric machine, in which two galvanically coupled electrical resonant circuits (2, 3) are excited in order to give rise to an electrical oscillation (9, 10), at least one coil (4 or 5) of the resonant circuits (2, 3) interacts inductively with the target (6), and the relative movement of the target (6) is deduced as a function of a change attributed to the relative movement (7) of the target (6) and taking account in particular of a difference in the respective oscillation (9 or 10) of the resonant circuits (2, 3), **characterized in that** the relative movement of the target (6) is deduced as a function of a phase shift (13) of the oscillations (9, 10) of the galvanically coupled resonant circuits (2, 3), which are each part of a different oscillator (2', 3') among two oscillators (2', 3').

11. Method according to claim 10, **characterized in that** there is imposed on the resonant circuits (2, 3) a reference oscillation which differs from the resonant frequency thereof.

12. Method according to claim 11, **characterized in that** the relative movement of the target (6) is deduced as a function of the phase differences resulting from the reference oscillation (23) and the oscillations (9, 10) of the resonant circuits (2, 3).

13. Method according to claim 11, **characterized in that** the relative movement of the target (6) is deduced as a function of the difference between the phase differences resulting from the reference oscillation (23) and the oscillations (9, 10) of the resonant circuits (2, 3).

14. Method according to one of claims 10 to 13, **characterized in that** the resonant circuits (2, 3) are galvanically coupled to the same reference oscillator (22).

15. Method according to claim 14, **characterized in that** the reference oscillation (23) is imposed with an additional time delay on one resonant circuit (3) in contrast to the other resonant circuit (2).

## Revendications

1. Dispositif pour la mesure d'un mouvement relatif (7) d'une cible (6), en particulier d'un rotor d'une machine électrique, avec au moins deux circuits oscillants électriques (2, 3) en couplage galvanique, au moins un des circuits oscillants (2, 3) coopérant avec la cible (6) par induction avec sa bobine (4 ou 5), et avec un circuit d'analyse (8) relié aux circuits oscillants (2, 3) qui génère, en fonction du changement de l'oscillation (9 ou 10) des circuits oscillants (2, 3) imputable au mouvement relatif (7) de la cible (6), des données de mesures (11) qui sont utilisées, au moins, pour déduire le mouvement relatif (7) de la cible (6), **caractérisé en ce que** les circuits oscillants (2, 3) en couplage galvanique font partie chacun d'un autre oscillateur (2', 3') parmi deux oscillateurs (2', 3'), le circuit d'analyse (8) générant des données de mesure (11) en fonction d'un décalage de phase (13) d'au moins une oscillation (9, 10) des circuits oscillants (2, 3) des oscillateurs (2', 3').

2. Dispositif selon la revendication 1, **caractérisé en ce qu'**au moins deux circuits oscillants électriques (2, 3) coopèrent par induction avec la cible (6) avec leur bobine (4, 5) respective.

3. Dispositif selon la revendication 1 ou 2, **caractérisé en ce que** le dispositif (21, 24, 29) comprend un oscillateur de référence (22) relié électriquement aux circuits oscillants (2, 3), qui présente une oscillation de référence (23) et transmet celle-ci aux circuits oscillants (2, 3),
le circuit d'analyse (8) générant des données de mesure (11) en fonction des différences de phase qui résultent de l'oscillation de référence (23) et des oscillations (9, 10) des circuits oscillants (2, 3) ou
le circuit d'analyse (8) générant des données de mesure (11) en fonction de la différence des différences de phase qui résultent de l'oscillation de référence (23) et des oscillations (9, 10) des circuits oscillants (2, 3).

4. Dispositif selon l'une des revendications 1 à 3, **caractérisé en ce que** les fréquences de résonance des circuits oscillants (2, 3) sont pour l'essentiel les mêmes.

5. Dispositif selon l'une des revendications 3 à 4, **caractérisé en ce que** la fréquence de l'oscillation de référence (23) est pour l'essentiel la même que la fréquence de résonance d'au moins un des circuits oscillants (2, 3).

6. Dispositif selon l'une des revendications 1 à 5, **caractérisé en ce que** le circuit d'analyse (8) présente un élément de mesure du temps (16), en particulier un élément TDC, qui génère des données de mesure (11) avec des valeurs de temps en fonction du décalage de phase.

7. Dispositif selon l'une des revendications 1 à 6, **caractérisé en ce que** le circuit d'analyse (8) génère des données de mesure (11) avec une tension analogique proportionnelle au décalage de phase.

8. Dispositif selon l'une des revendications 1 à 7, **caractérisé en ce que** les circuits oscillants (2, 3) sont en couplage galvanique avec le même oscillateur de référence (22).

9. Dispositif selon la revendication 8, **caractérisé en ce qu'**un circuit oscillant (3) parmi les deux circuits oscillants (2, 3) est couplé galvaniquement à l'oscillateur de référence (22) par l'intermédiaire d'un élément temporisateur (30).

10. Dispositif pour la mesure d'un mouvement relatif (7) d'une cible (6), en particulier d'un rotor d'une machine électrique, dans lequel deux circuits oscillants électriques (2, 3) en couplage galvanique sont excités pour produire une oscillation électrique (9, 10), au moins une bobine (4 ou 5) des circuits oscillants (2, 3) coopère par induction avec la cible (6) et le mouvement relatif de la cible (6) est déduit en fonction du changement imputable au mouvement relatif (7) de la cible (6) et en particulier en tenant compte d'un calcul de différence de l'oscillation (9 ou 10) des circuits oscillants (2, 3), **caractérisé en ce que** le mouvement relatif de la cible (6) est déduit en fonction d'un décalage de phase (13) des oscillations (9, 10) des circuits oscillants (2, 3) en couplage galvanique, qui font chacun partie d'un autre oscillateur (2', 3') parmi deux oscillateurs (2', 3').

11. Procédé selon la revendication 10, **caractérisé en ce qu'**une oscillation de référence différente de leur fréquence de résonance est imposée aux circuits oscillants (2, 3).

12. Procédé selon la revendication 11, **caractérisé en ce que** le mouvement relatif de la cible (6) est déduit en fonction des différences de phase qui résultent de l'oscillation de référence (23) et des oscillations (9, 10) des circuits oscillants (2, 3).

13. Procédé selon la revendication 11, **caractérisé en ce que** le mouvement relatif de la cible (6) est déduit en fonction de la différence des différences de phase qui résulte de l'oscillation de référence (23) et des oscillations (9, 10) des circuits oscillants (2, 3).

14. Procédé selon l'une des revendications 10 à 13, **caractérisé en ce que** les circuits oscillants (2, 3) sont en couplage galvanique avec le même oscillateur de référence (22).

15. Procédé selon la revendication 14, **caractérisé en ce que** l'oscillation de référence (23) est imposée à un circuit oscillant (3) avec une temporisation supplémentaire par rapport à l'autre circuit oscillant (2).
